# EUROPEAN PATENT SPECIFICATION

(11) **EP 4 013 825 B1**
(45) Date of publication and mention of the grant of the patent: **02.07.2025**
(21) Application number: 20764203.4
(22) Date of filing: 13.08.2020
(51) Int. Cl.: C09D 7/00

(54) **COMPOSITIONS AND METHODS FOR TREATING AND RECLAIMING PAINT FLUSH WASTE**
ZUSAMMENSETZUNGEN UND VERFAHREN ZUM BEHANDELN UND WIEDERGEWINNEN VON FARBSPÜLUNGEN
COMPOSITIONS ET PROCÉDÉS POUR LE TRAITEMENT ET LA RÉGÉNÉRATION DE DÉCHETS DE RINÇAGE DE PEINTURE

(30) Priority: 13.08.2019 US 201962885866 P
(43) Date of publication of application: 22.06.2022
(73) Proprietor: Heritage Research Group, LLC, Indianapolis, IN 46278 (US)
(72) Inventor: ROGERS, Anthony, Brownsburg, IN 46112 (US)
(74) Representative: Hamer, Christopher K.
(86) International application number: PCT/US2020/046056
(87) International publication number: WO 2021/030523

(56) References cited:
- EP-A2- 0 238 731
- WO-A1-01/36338
- WO-A1-2013/130021
- US-A1- 2001 005 496
- US-B1- 6 372 145
- US-B1- 9 969 680

## Description

### BACKGROUND

Manufacturers, such as paint manufacturers and/or automobile manufacturers who use or manufacture paints, may flush their systems between color changes so as to minimize waste and contamination of their equipment and products. Barium has been used in increased concentrations in paint formulations recently, which may trigger regulatory restrictions on how the waste is treated or otherwise disposed. Therefore, there remains a need for improved methods and compositions for flushing systems and treating waste streams from these systems.

Treating waste streams is known in the art, for example EP 238,731 describes a method for the treatment of wastewater discharged from airplane manufacturing operations to remove chemicals, such as phenol, methylene chloride and toluene. The method includes the steps of adjusting the pH of the waste stream to 5; adding iron ions to the waste stream; adding hydrogen peroxide ions to the waste stream; re-adjusting the pH of the stream to 8.5-9.5; adding polymer to the stream to form sludge; and removing the sludge.

US 9,969,680 describes a process for separating long chain amino acids, dibasic acids, short chain alkylamine and alkanoic acid from an acid hydrolysis mixture of a mixed amide derivative in an industrial waste liquor.

WO 2013/130021 describes deriving titanium dioxide from a waste stream such as a polyolefin stream by adding a basic solution to such a waste stream.

US 6,372,145 describes a method of treating produced water to lower the total dissolved solid content of water for safe environmental discharge.

US 2001/005496 describes the treatment of industrial waste streams such as electric arc furnace effluents that contain zinc compounds.

WO 01/36338 describes the treatment of solutions of water-soluble waste polymers such as polyvinyl alcohol, polyacrylate and poly maleic acid. The solutions may contain polymer waste, such as plastic fibers and molded materials.

### SUMMARY

The waste stream generated from cleaning or flushing of manufacturing equipment is treated so that paint solids (e.g., inorganics) and organic compounds from the paint formulations are removed from the composition used to clean or flush the manufacturing equipment. In certain embodiments, the composition used to clean or flush the manufacturing equipment is a waterborne purge solution

In other embodiments, the waterborne purge solution used to clean or flush the manufacturing equipment is treated by raising the pH of the composition, lowering the pH of the composition, or using an oxidizer such as bleach. In some embodiments, a strong base such as, but not limited to, sodium hydroxide or lime is used. In still other embodiments, a waterborne purge or spent purge solvent may be treated with an ion-exchange resin.

In one embodiment, manufacturing equipment is cleaned or flushed by the use of a waterborne purge solution. In some embodiments, the waterborne purge solution used is a water/solvent mixture, sometimes called, DI Purge or Hydropurge. In certain embodiments, the waterborne purge solution comprises water; an organic solvent; an ether; a glycol; a glycol ether; a surfactant; an ethanolamine; an alcohol; an ester; a ketone; poly(oxy-1,2-ethanediyl), a-hexyl-w-hydroxy-; monoethanolamine; benzyl alcohol; tris(2-butoxyethyl)phosphate; or a combination thereof.

In another embodiment, the colored paint formulation used in manufacturing equipment is cleaned out or flushed from the manufacturing equipment prior to the use of a different color formulation in the manufacturing equipment.

In some embodiments, a filter aid is used to improve the filterability or dewatering of the solids in the waste stream. In certain embodiments, the filter aid is diatomite, diatomaceous earth, perlite, and/or cellulose.
Additional embodiments of the invention, as well as features and advantages thereof, will be apparent from the descriptions herein.

### BRIEF DESCRIPTION OF THE DRAWINGS

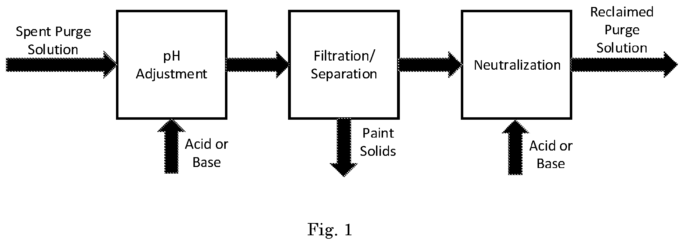

Fig. 1 is a process flow diagram of one embodiment of the present disclosure showing spent solvent purge as the starting material for the process undergoing a pH adjustment with an acid and/or a base, a filtration and/or separation process giving paint solids and a supernatant that can undergo neutralization or another pH adjustment step with acid and/or base to provide reclaimed purge solution.

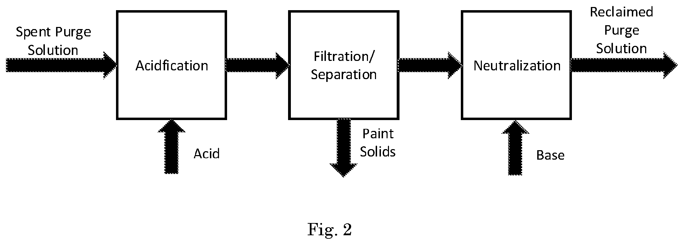

Fig. 2 is a process flow diagram of one embodiment of the present disclosure showing spent solvent purge as the starting material for the process undergoing a pH adjustment with an acid, a filtration and/or separation process giving paint solids and a supernatant that can undergo neutralization or another pH adjustment step with a base to provide reclaimed purge solution.

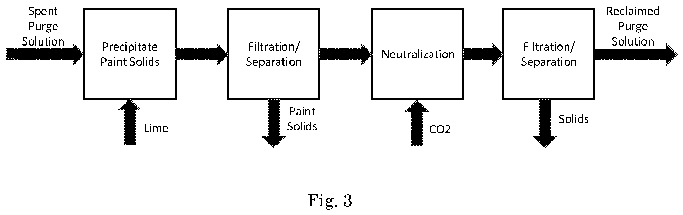

Fig. 3 is a process flow diagram of one embodiment of the present disclosure showing spent solvent purge as the starting material for the process where lime is added to precipitate paint solids, a filtration and/or separation step to provide paint solids and a supernatant that can undergo a neutralization or pH adjustment step by addition of CO₂, another filtration and/or separation step to provide solids and a reclaimed purge solution.

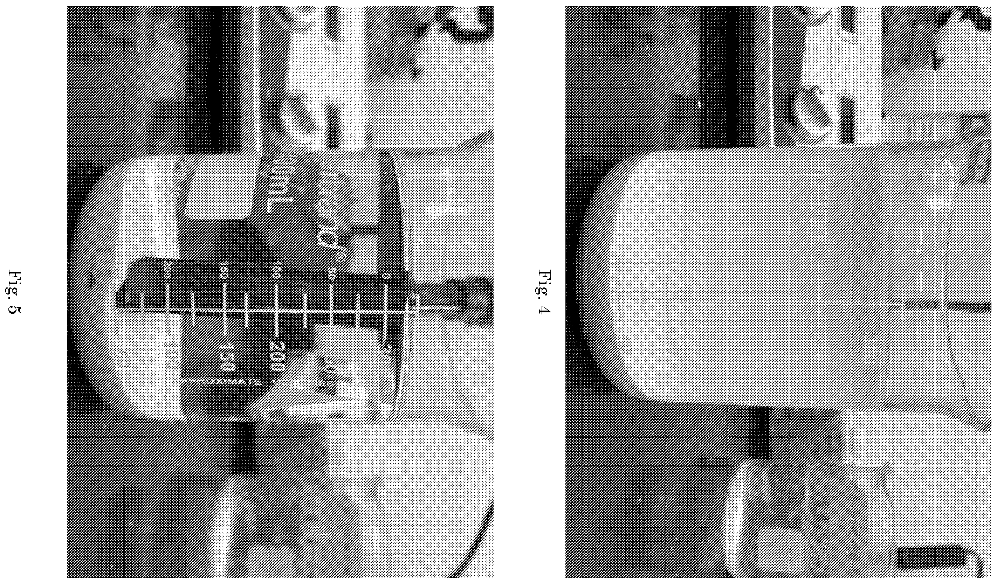

Fig. 4 shows a digital image of treated spent purge solvent after filtering paint solids, but before an act of neutralization, with ion exchange resin.
Fig. 5 shows a digital image of treated spent purge solvent after neutralization, with ion exchange resin.

### DETAILED DESCRIPTION

For the purposes of promoting an understanding of the principles of the invention, reference will now be made to certain embodiments and specific language will be used to describe the same. It will nevertheless be understood that no limitation of the scope of the invention is thereby intended, such alterations and further modifications, and such further applications of the principles of the invention as described herein being contemplated as would normally occur to one skilled in the art to which the invention relates. Additionally, in the detailed description below, numerous alternatives are given for various features. It will be understood that each such disclosed alternative, or combinations of such alternatives, can be combined with the more generalized features discussed in the Summary above, or set forth in the embodiments described below to provide additional disclosed embodiments herein.

During the manufacture of paints or other coatings with color, the manufacturing systems or apparatus may need to be cleaned when switching between colors so as to minimize contamination between the colors For example. Some manufacturers flush the lines of the manufacturing equipment with water-based low volatile organic compound (VOC) systems. One example includes a waterborne purge solvent concentrate used by some manufacturers is called Hydropurge^{®}. Hydropurge can be purchased as a concentrate that is diluted with water to form a waterborne purge solution which is then flushed through the lines once. For example, Hydropurge concentrate may be diluted as 9 part water and 1 part Hydropurge concentrate to form a waterborne purge solution which is used to flush the lines of manufacturing equipment. Other waterborne purge solvents can be used such as DI Purge.

After a purge composition is flushed through the lines, this generates a waste stream containing the purge composition used to flush the lines as well as materials (e.g., paint) that were removed from the line. Typically, the resulting waste stream has between about 1% to about 5% of material that was removed from the line. This may include barium that is flushed from the line and which can be present in quantities from about 0.001%to about 0.002%, or from about 0.00125% to about 0.0014%. Materials flushed from the lines can include, but is not limited to, dyes or pigments; metals such as barium; and organic compounds such as, but not limited to, acrylics, acrylic enamels, and/or urethanes. When used, barium may be in any form, such as elemental barium, barium oxide, barite or baryte, barium sulfate, witherite or barium carbonate, barium nitrate, or another salt of barium.

Some materials used in paints or other coatings may be regulated. For example, compositions with a certain level of barium may require special handling and or treatment prior to their final disposition. Therefore, it may be advantageous to have a recycling or treatment process that can be used to remove such compounds from waste streams. In some embodiments of the present disclosure, such a recycling or treatment process can be onsite at the manufacturing facility. In other embodiments, the recycling or treatment process may be performed at a facility some distance away from the manufacturing facility where the waste stream originated.

The paint formulations used in the present invention comprise at least one organic component and at least one inorganic component, wherein the organic paint component includes acrylics, acrylic enamels, and/or urethanes and wherein the inorganic paint component includes metal compounds. The organic components are dissolved in a phase of the waste stream, while the inorganic components are suspended solids. In certain embodiments, it has been surprisingly discovered that altering the pH of the waste stream can effectively (i) floc the suspended inorganic paint components (e.g., undesirable metals such as barium), and (ii) precipitate the organic paint components(s), thereby resulting in the removal of both components from the waste stream through the formation of a mass of paint solids. Without being bound to any particular theory, it is believed that the floccing effect may be the result of a solid base (e.g., lime) acting as a substrate for flocculation. In other embodiments, and still without being bound to any particular theory, it may be calcium which affects or improves the observed floccing effect.

Solid waste from some manufactures contains a level of leachable barium that would require the waste to be treated as hazardous waste. The Environmental Protection Agency (EPA) regulates wastes, including listing various wastes in lists. These lists include the D List, the F List, the K List, the P List, and the U List. The EPA lists Barium, chemical symbol "Ba", with Hazardous Waste Code "D005" on the D List with a regulated level of 100.0 mg/L or ppm.

Waste streams after treatment according to the methods disclosed and claim typically have a concentration of barium of about 1 ppm, below about 1 ppm, below about 10 ppm, below about 50 ppm, below about 75 ppm, or below about 100 ppm as measured by the Toxicity Characteristic Leaching Procedure (TLCP). TLCP is also known as EPA Method 1311. EPA Method 6010D (ICP-OES or Inductively Coupled Plasma - Optical Emission Spectroscopy), is often used in conjunction with EPA Method 1311 as a detection method. When the term TLCP is used herein it can refer to EPA Method 1311 along, EPA Method 1311 used in conjunction with EPA Method 6010D, or EPA Method 1311 used in conjunction with another method.

Any acid may be used in embodiments of the present disclosure. Strong acids may be used in embodiments of the present disclosure and weak acids can be used in embodiments of the present disclosure. Examples of acids that may be used include, but are not limited to, sulfuric acid, phosphoric acid, nitric acid, hydrochloric acid, methane sulfonic acid, formic acid, acetic acid a conjugate acid of a weak base, or an acidic waste stream. When an acid is used, it may be used to adjust the pH of a composition to a neutral or an acidic pH, for example, but not limited to about 3 to about 5, about 4, about 5 to about 9, about 6 to about 8, and/or about 7.

Any base may be used in embodiments of the present disclosure. String bases may be used in embodiments of the present disclosure and weak bases may be used in embodiments of the present disclosure. Examples of bases that may be used include, but are not limited to lithium hydroxide, sodium hydroxide, potassium hydroxide, magnesium hydroxide, calcium hydroxide, ammonia, ammonium hydroxide, or a conjugate base of a weak acid, or a basic waste stream. When a base is used, it may be used to adjust the pH of a composition to a neutral or a basic pH, for example, but not limited to about 10 to about 14, about 11 to about 13, about 12, about 12.2, about 5 to about 9, about 6 to about 8, and/or about 7.

Oxidizers may be used in embodiments of the present disclosure. Examples of oxidizers that may be used include, but are not limited to bleach, hypochlorite, chloramine, a permanganate, ozone, or hydrogen peroxide.

Filter aids may include, but are not limited to, diatomite, diatomaceous earth, perlite, and/or cellulose.

In order to promote a further understanding of the present invention and its various embodiments, the following specific examples are provided. It will be understood that these examples are illustrative and not limiting of the invention.

### EXAMPLE 1

### Flushing Manufacturing Equipment Lines to Change Compositions

An emulsion is formed by diluting 1 part Hydropurge^{®} Concentrate with 9 parts water for form a waterborne purge solution . A quantity of this emulsion is then flushed through lines of the manufacturing equipment used to manufacture or apply a composition comprising one or more dyes or pigments. The composition may include other compounds including, but not limited to barium, barium salts, organic compounds, inorganic compounds, metallic flakes, iridescent pigments or pearls. After flushing of the manufacturing equipment, the resulting waste stream suspension that comprises one or more dyes or pigments, as well as other compounds used in the composition. A new composition to be manufactured or applied is then introduced into the manufacturing equipment.

### EXAMPLE 2

### Treatment of Composition used to Flush the Lines of Manufacturing Equipment

As noted above, the waste stream that results from flushing the lines of manufacturing equipment may comprise a suspension containing one or more dyes or pigments, as well as other compounds used in the composition after washing or flushing the manufacturing equipment. This suspension is broken/separated by adding 1% by weight lime to raise the pH. Solid lime is left in suspension which acts as a flocking agent for the one or more dyes, pigments, or other organics to adhere to. 0.5 weight percent of filter aid is added and the composition is mechanically agitated. The composition is then filtered with a plate and frame filter press. The solid is collected and disposed of. The liquid filtrate is then disposed of, or, alternatively, the pH of the filtrate is neutralized by bubbling CO₂ through the filtrate. Once the pH of the filtrate has been neutralized, the filtrate is then used to flush the manufacturing equipment again.

### EXAMPLE 3

### Treatment of Waste Stream Comprising an Emulsion

The emulsified waste stream with a pH between about 5 and about 9 was broken by the addition of a 1 percent by weight of lime and raised the pH to 12.2. The composition was allowed to mix for 10 minutes. 0.5% by weight of Perlite was added to the mixture and allowed to mix for an additional 10 minutes. After the emulsion/mixture finished mixing, the paint materials present and excess solid lime was separated by filtration using a Buchner funnel and vacuum filtering. The solid which included paint materials and solid lime had a barium concentration of 1 ppm barium as measured by TCLP, and was disposed of as solid non-hazardous landfill waste. The composition of this solid as measured by XRF is shown in Table 1.

**Table 1. Composition of a solid waste as measured by X-Ray Fluorescence (XRF).**

| ***Constituent*** | ***Quantity (by weight)*** |
|---|---|
| Ca | 21.8% |
| Ti | 9.8% |
| Si | 7.1% |
| Al | 2.0% |
| K | 0.92% |
| Fe | 0.67% |
| Ba | 0.14% |

The pH of the filtrate was then modified to 6.8 by addition of carbon dioxide by bubbling in CO₂ using a diffusing stone. CaCO₃ was formed during and after addition of carbon dioxide, and the precipitate was removed by filtration.

In another embodiment, an ion-exchange resin may be used in addition to, or instead of a neutralization step. In such embodiments, when used, an ion-exchange resin may neutralize the acid or base by removing the associated anions or cations (for example, but not limited to, Cl-, SO₄²⁻, Ca²⁺, Na⁺) and by forming water with the associate hydroxide or hydrogen ion. When an ion-exchange resin is used and without being bound by theory, the use of an ion-exchange resin may have the benefit of not leaving dissolved solids and/or salts in the solvent-water mixture. Such solids and/or salts may build up over time and affect solvency, limit how much material may be recycled due to the risks of precipitates falling out of solution, and also does not require complicated equipment and additional reagents, and/or additional filtrations steps in the process. The ion-exchange resin could then be regenerated by methods known to one of ordinary skill in the art and reused. When an ion-exchange resin is used, the process may result in a brine waste stream that can be sent to a publically owned water treatment (POWT) plants or waste water treatment plants. Fig. 4 shows a digital image of spent purge solvent after filtering out paint solids, but before neutralization, with ion-exchange resin at the bottom of the beaker. Fig. 5 shows a digital image of spent purge solvent after neutralization with ion-exchange resin at the bottom of the beaker.

## Claims

1. A method for treating a waste stream from flushing systems, the method comprising the acts of:
providing a composition wherein said composition comprises at least one suspended inorganic paint component and at least one dissolved organic paint component;
floccing the inorganic paint component and precipitating the organic paint component to provide a composition comprising a liquid portion and paint solids; and
separating the paint solids from the liquid portion of the composition
wherein the organic paint component includes acrylics, acrylic enamels, and/or urethanes;
and wherein the inorganic paint component includes metal compounds.

2. The method of claim 1, further comprising the act of:
adjusting the pH of the liquid portion of the composition.

3. The method of any preceding claim, wherein the inorganic paint component comprises barium.

4. The method of Claim 1, wherein the method further comprises switching paint formulations in a manufacturing process from a first color formulation to a second color formulation, said first color formulation comprising at least one suspended inorganic paint component and at least one dissolved organic paint component, the method comprising the acts of:
flushing lines containing the first color formulation with a first composition
providing a second composition wherein said second composition comprises the suspended inorganic paint component and the dissolved organic paint component;
floccing the inorganic paint component and precipitating the organic paint component to provide a second composition comprising a liquid portion and paint solids;
separating the paint solids from the liquid portion of the second composition to provide a solid portion; and
introducing a second color component into the lines of the manufacturing process.

5. The method of claim 4, further comprising the acts of:
adjusting the pH of the liquid portion of the second composition.

6. The method of claim 5, wherein a base is used floc the inorganic paint component and precipitate the organic paint component.

7. The method of claim 6, wherein the base is a strong base; optionally wherein the strong base is selected from the group consisting of lithium hydroxide, sodium hydroxide, potassium hydroxide, magnesium hydroxide, calcium hydroxide, or lime .

8. The method of claim 6, wherein an acid is used to floc the inorganic paint component and precipitate the organic paint component.

9. The method of claim 8, wherein the acid is a strong acid; optionally wherein the strong acid is sulfuric acid, phosphoric acid, nitric acid, hydrochloric acid, or methane sulfonic acid.

10. The method of claim 4, wherein the act of separating the paint solids from the liquid portion of the second composition to provide a solid portion comprises filtration or centrifugation.

11. The method of claim 10, wherein a filter aid is used to aid in filtration.

12. The method of claim 10, wherein the filtration comprises centrifugal filtration, gravity filtration, vacuum filtration, cold filtration, hot filtration, multilayer filtration, mechanical filtration, surface filtration, depth filtration, or using a plate and frame filter press.

13. The method of claim 11, wherein said filter aid is diatomaceous earth, diatomite, perlite, or cellulose.

14. The method of any of Claims 4 to 13, wherein an oxidizer is used in breaking the emulsion of said second composition; optionally wherein the oxidizer is bleach, hypochlorite, chloramine, a permanganate, ozone, or hydrogen peroxide.

15. The method of claim 5, wherein CO₂ is used to adjust the pH of the liquid portion of the second composition after filtration.

## Patentansprüche

1. Verfahren zur Aufbereitung eines Abfallstroms von Spülsystemen, wobei das Verfahren die Arbeitsschritte umfasst:
Bereitstellen einer Zusammensetzung, wobei die besagte Zusammensetzung mindestens eine suspendierte anorganische Farbkomponente und mindestens eine gelöste organische Farbkomponente umfasst;
Ausflocken der anorganischen Farbkomponente und Ausfällen der organischen Farbkomponente, um eine Zusammensetzung bereitzustellen, die einen flüssigen Anteil und Farbfeststoffe umfasst; und
Trennen der Farbfeststoffe von dem flüssigen Anteil der Zusammensetzung,
wobei die organische Farbkomponente Acryle, Acryllacke und/oder Urethane einschließt;
und wobei die anorganische Farbkomponente Metallverbindungen einschließt.

2. Verfahren nach Anspruch 1, ferner umfassend den Arbeitsschritt:
Einstellen des pH-Werts des flüssigen Anteils der Zusammensetzung.

3. Verfahren nach einem vorhergehenden Anspruch, wobei die anorganische Farbkomponente Barium umfasst.

4. Verfahren nach Anspruch 1, wobei das Verfahren ferner ein Wechseln von Farbformulierungen in einem Herstellungsvorgang von einer ersten Farbformulierung zu einer zweiten Farbformulierung umfasst, wobei die besagte erste Farbformulierung mindestens eine suspendierte anorganische Farbkomponente und mindestens eine gelöste organische Farbkomponente umfasst, wobei das Verfahren die Arbeitsschritte umfasst:
Spülen von Leitungen, die die erste Farbformulierung enthalten, mit einer ersten Zusammensetzung;
Bereitstellen einer zweiten Zusammensetzung, wobei die besagte zweite Zusammensetzung die suspendierte anorganische Farbkomponente und die gelöste organische Farbkomponente umfasst;
Ausflocken der anorganischen Farbkomponente und Ausfällen der organischen Farbkomponente, um eine zweite Zusammensetzung bereitzustellen, die einen flüssigen Anteil und Farbfeststoffe umfasst;
Trennen der Farbfeststoffe von dem flüssigen Anteil der zweiten Zusammensetzung, um einen festen Anteil bereitzustellen; und
Einbringen einer zweiten Farbkomponente in die Leitungen des Herstellungsvorgangs.

5. Verfahren nach Anspruch 4, ferner umfassend die Arbeitsschritte:
Einstellen des pH-Werts des flüssigen Anteils der zweiten Zusammensetzung.

6. Verfahren nach Anspruch 5, wobei eine Base dazu verwendet wird, die anorganische Farbkomponente auszuflocken und die organische Farbkomponente auszufällen.

7. Verfahren nach Anspruch 6, wobei die Base eine starke Base ist; optional wobei die starke Base aus der Gruppe bestehend aus Lithiumhydroxid, Natriumhydroxid, Kaliumhydroxid, Magnesiumhydroxid, Calciumhydroxid oder Kalk ausgewählt ist.

8. Verfahren nach Anspruch 6, wobei eine Säure dazu verwendet wird, die anorganische Farbkomponente auszuflocken und die organische Farbkomponente auszufällen.

9. Verfahren nach Anspruch 8, wobei die Säure eine starke Säure ist; optional wobei die starke Säure Schwefelsäure, Phosphorsäure, Salpetersäure, Salzsäure oder Methansulfonsäure ist.

10. Verfahren nach Anspruch 4, wobei der Arbeitsschritt des Trennens der Farbfeststoffe von dem flüssigen Anteil der zweiten Zusammensetzung, um einen festen Anteil bereitzustellen, eine Filtration oder Zentrifugation umfasst.

11. Verfahren nach Anspruch 10, wobei eine Filterhilfe dazu verwendet wird, eine Filtration zu unterstützen.

12. Verfahren nach Anspruch 10, wobei die Filtration Zentrifugalfiltration, Schwerkraftfiltration, Vakuumfiltration, Kaltfiltration, Heißfiltration, Mehrschichtfiltration, mechanische Filtration, Oberflächenfiltration, Tiefenfiltration oder Verwendung einer Platten- und Rahmenfilterpresse umfasst.

13. Verfahren nach Anspruch 11, wobei die besagte Filterhilfe Diatomeenerde, Diatomit, Perlit oder Cellulose ist.

14. Verfahren nach einem der Ansprüche 4 bis 13, wobei ein Oxidationsmittel beim Aufbrechen der Emulsion der besagten zweiten Zusammensetzung verwendet wird; optional wobei das Oxidationsmittel Bleichmittel, Hypochlorit, Chloramin, ein Permanganat, Ozon oder Wasserstoffperoxid ist.

15. Verfahren nach Anspruch 5, wobei CO₂ dazu verwendet wird, den pH-Wert des flüssigen Anteils der zweiten Zusammensetzung nach einer Filtration einzustellen.

## Revendications

1. Procédé de traitement d'un flux de déchets provenant de systèmes de rinçage, le procédé comprenant les actes consistant à :
fournir une composition, ladite composition comprenant au moins un composant de peinture inorganique en suspension et au moins un composant de peinture organique dissous ;
faire floculer le composant de peinture inorganique et faire précipiter le composant de peinture organique pour produire une composition comprenant une partie liquide et des matières solides de peinture ; et
séparer les matières solides de peinture de la partie liquide de la composition
dans lequel le composant de peinture organique comprend des composés acryliques, des émaux acryliques et/ou des uréthanes ;
et dans lequel le composant de peinture inorganique comprend des composés métalliques.

2. Procédé selon la revendication 1, comprenant en outre l'acte consistant à :
ajuster le pH de la partie liquide de la composition.

3. Procédé selon l'une quelconque des revendications précédentes, dans lequel le composant de peinture inorganique comprend du baryum.

4. Procédé selon la revendication 1, le procédé comprenant en outre le passage de formulations de peinture, dans un procédé de fabrication, d'une première formulation de couleur à une deuxième formulation de couleur, ladite première formulation de couleur comprenant au moins un composant de peinture inorganique en suspension et au moins un composant de peinture organique dissous, le procédé comprenant les actes consistant à :
rincer des conduites contenant la première formulation de couleur avec une première composition
fournir une deuxième composition, ladite deuxième composition comprenant le composant de peinture inorganique en suspension et le composant de peinture organique dissous ;
faire floculer le composant de peinture inorganique et faire précipiter le composant de peinture organique pour produire une deuxième composition comprenant une partie liquide et des matières solides de peinture ;
séparer les matières solides de peinture de la partie liquide de la deuxième composition pour produire une partie solide ; et
introduire un deuxième composant de couleur dans les conduites du procédé de fabrication.

5. Procédé selon la revendication 4, comprenant en outre l'acte consistant à :
ajuster le pH de la partie liquide de la deuxième composition.

6. Procédé selon la revendication 5, dans lequel une base est utilisée pour faire floculer le composant de peinture inorganique et précipiter le composant de peinture organique.

7. Procédé selon la revendication 6, dans lequel la base est une base forte ; optionnellement dans lequel la base forte est sélectionnée dans le groupe constitué de l'hydroxyde de lithium, de l'hydroxyde de sodium, de l'hydroxyde de potassium, de l'hydroxyde de magnésium, de l'hydroxyde de calcium, ou de la chaux.

8. Procédé selon la revendication 6, dans lequel un acide est utilisé pour faire floculer le composant de peinture inorganique et précipiter le composant de peinture organique.

9. Procédé selon la revendication 8, dans lequel l'acide est un acide fort ; optionnellement dans lequel l'acide fort est l'acide sulfurique, l'acide phosphorique, l'acide nitrique, l'acide chlorhydrique ou l'acide méthanesulfonique.

10. Procédé selon la revendication 4, dans lequel l'acte consistant à séparer les matières solides de peinture de la partie liquide de la deuxième composition pour produire une partie solide comprend une filtration ou une centrifugation.

11. Procédé selon la revendication 10, dans lequel un adjuvant de filtration est utilisé pour faciliter la filtration.

12. Procédé selon la revendication 10, dans lequel la filtration comprend la filtration centrifuge, la filtration par gravité, la filtration sous vide, la filtration à froid, la filtration à chaud, la filtration multicouche, la filtration mécanique, la filtration en surface, la filtration en profondeur, ou l'utilisation d'un filtrepresse à plaques et à cadres.

13. Procédé selon la revendication 11, dans lequel ledit adjuvant de filtration est de la terre de diatomées, de la diatomite, de la perlite ou de la cellulose.

14. Procédé selon l'une quelconque des revendications 4 à 13, dans lequel un oxydant est utilisé pour rompre l'émulsion de ladite deuxième composition ; optionnellement dans lequel l'oxydant est de l'eau de Javel, de l'hypochlorite, de la chloramine, un permanganate, de l'ozone ou du peroxyde d'hydrogène.

15. Procédé selon la revendication 5, dans lequel du CO₂ est utilisé pour ajuster le pH de la partie liquide de la deuxième composition après la filtration.
